# EUROPÄISCHE PATENTSCHRIFT

(11) **EP 0 685 735 B1**
(45) Veröffentlichungstag und Bekanntmachung des Hinweises auf die Patenterteilung: **16.01.2002**
(21) Anmeldenummer: 95810328.5
(22) Anmeldetag: 17.05.1995
(51) Int. Cl.: G01N 27/28, G01N 27/416, G01N 27/30

(54) **Vorrichtung für die Voltammetrie, Indikatorelektroden-Anordnung für eine solche Vorrichtung, insbesondere als Teil einer Bandkassette, und Reihenanalyse-Verfahren für die Voltammetrie**
Voltammetric apparaus, indicating electrode arrangement for such apparatus, especially as a part of a tape cassette, and voltammetric method for serial analysis
Appareil de voltamétrie, dispositif d'électrodes indicatrices pour un tel appareil, particulièrement comme partie d'une cassette à bande, et méthode d'analyse sérielle pour la voltamétrie

(30) Priorität: 03.06.1994 CH 175294
(43) Veröffentlichungstag der Anmeldung: 06.12.1995
(73) Patentinhaber: METROHM AG, 9100 Herisau (CH)
(72) Erfinder: Girault, Hubert, CH-1088 Ropraz (CH)
(74) Vertreter: Hepp, Dieter

(56) Entgegenhaltungen:
- EP-A- 0 459 511
- WO-A-91/08474
- DE-A- 3 805 493
- US-A- 5 131 999
- US-A- 5 228 972
- US-A- 5 312 590

## Beschreibung

Die Erfindung betrifft eine Vorrichtung für die Voltammetrie gemäss dem Oberbegriff von Anspruch 1, eine Indikatorelektroden-Anordnung für eine solche Vorrichtung, insbesondere als Teil einer Bandkassette, sowie ein Verfahren zum Durchführen einer voltammetrischen Analyse gemäss dem Oberbegriff von Anspruch 17.

Die Voltammetrie ist eine elektrochemische Methode zur Stoffanalyse, bei der Strom-Spannungs-Kurven gemessen und ausgewertet werden. Eine Referenzelektrode und eine Indikatorelektrode tauchen in die zu untersuchende Flüssigkeit ein. Diese werden an eine elektrische Messeinrichtung angeschlossen, mit der ein bekanntes Potentialgefälle zwischen Referenzelektrode und Indikatorelektrode erzeugt werden kann. Dieses Potential wird bei der Voltammetrie gezielt verändert und aus der daraus resultierenden Stromänderung können Informationen über die zu untersuchende Flüssigkeit gewonnen werden. In der modernen Polarographie wird praktisch ausschliesslich das Drei-Elektroden-Prinzip verwendet, bei dem neben der Referenzelektrode und der Indikatorelektrode eine zusätzliche Hilfselektrode in die zu untersuchende Flüssigkeit eingetaucht und ebenfalls mit der elektrischen Messeinrichtung verbunden wird. Durch geeignete elektrische Beschaltung wird nun erreicht, dass nach wie vor das Potential zwischen Referenzelektrode und Indikatorelektrode durch die Messeinrichtung kontrollierbar ist, dass aber im Gegensatz zum Zwei-Elektroden-Prinzip kein Strom durch die Referenzelektrode fliesst. Mögliche Beschaltungsarten der Elektroden sind der einschlägigen Fachliteratur zu entnehmen. Die im folgenden beschriebene Erfindung ist unabhängig von dem verwendeten Messprinzip (Zwei- oder Drei-Elektroden-Prinzip) verwendbar.

Beim Durchführen der Messung spielt sich an der Indikatorelektrode eine chemische Reaktion ab. Dabei können die Eigenschaften der Elektrode verändert werden, was sich negativ auf die Wiederholbarkeit der Messung auswirkt. Um zuverlässige Messresultate zu erhalten, muss daher die Indikatorelektrode von Zeit zu Zeit ausgewechselt werden. Bei der Polarographie, einem der Voltametrie nahe verwandten Verfahren der Elektroanalyse, wird eine Quecksilber-Tropf-Elektrode als Indikatorelektrode verwendet. Der Quecksilbertropfen fällt in periodischen Abständen nach unten und wird durch einen neuen Tropfen ersetzt, so dass die Oberfläche der Indikatorelektrode laufend erneuert wird. Die mit Indikatorelektroden aus Feststoffen arbeitende Voltametrie hat jedoch gegenüber der Polarographie einige Vorteile. So ist z.B. die Grösse der Indikatorelektrode konstant und deren Material kann praktisch beliebig gewählt werden.

Für die Voltametrie werden in der Regel Indikatorelektroden mit einer Elektrodenfläche von höchstens 20 mm² verwendet. Besonders bevorzugt werden sogenannte Mikroelektroden eingesetzt, deren Elektrodenfläche maximal 0,05 mm² beträgt. Diese können sowohl einzeln, als auch in Gruppen angewendet werden, wobei mehrere elektrisch verbundene Mikroelektroden zu einem Elektroden-Array zusammengefasst werden. Auch diese aus einem Feststoff bestehenden Indikatorelektroden werden häufig ausgewechselt, so dass spätere Messungen nicht durch eine Veränderung der Indikatorelektrode (Memory-Effekt) beeinflusst werden.

Die Schrift US-5,131,999 zeigt eine Vorrichtung für die Voltametrie mit einem Gefäss zur Aufnahme einer zu analysierenden Flüssigkeit, in welchem Gefäss unterhalb des vorgesehenen Flüssigkeitsspiegels eine mit einer Messeinrichtung verbundene Referenzelektrode angeordnet ist. Mehrere Indikatorelektroden sind vorgesehen, von denen sich eine als Indikatorelektrode im für die Flüssigkeit vorgesehenen Bereich des Gefässes befindet. Diese Indikatorelektrode ist durch geeignete Mittel mit der Messeinrichtung verbunden.

Die Schrift EP-0,459,511 zeigt eine Vorrichtung zum Messen der Konzentration von Flüssigkeiten mittels einer Enzym-Elektrode.
Ein Kassettengehäuse ist vorgesehen, in welchem auf einer Vorratsspule ein Vorrat von Trägerband aufgespult ist. Das Trägerband ist auf eine Zugspule abwickelbar. Das Trägerband weist eine Mehrzahl von Öffnungen auf, die mit Membranen bedeckt sind. Vor einer Messung wird das Trägerband im Bereich einer Öffnung und Membrane mit einem dünnen Film einer zu messenden Testflüssigkeit bedeckt. Zur Messung wird eine Enzym-Elektrode gegen die Membrane gefahren.

Für eine rationelle Arbeitsweise bei der Analyse ist es daher wesentlich, dass die Indikatorelektrode leicht ausgewechselt werden kann. Die Figur 6 der WO-91/08474 zeigt eine Vorrichtung für die Elektroanalyse von Flüssigkeiten, bei der sowohl die Indikatorelektrode als auch die grössere Referenzelektrode auf einer gemeinsamen Trägerplatte fixiert sind. Beide Elektroden sind über Leiterbahnen mit Kontaktflächen verbunden und durch Einstecken der Trägerplatte in eine dazugehörende Halterung werden die Kontaktflächen mit einer elektrischen Messeinrichtung verbunden. Um nun die Indikatorelektrode auszuwechseln, muss die gesamte Trägerplatte aus der genannten Halterung herausgenommen und durch eine neue ersetzt werden. Dazu sind mehrere Handgriffe notwendig, was die Anwesenheit einer Bedienperson erfordert. Ausserdem wird mit der Trägerplatte gleichzeitig auch die Referenzelektrode ausgewechselt, was nicht notwendig wäre.

Es ist daher eine Aufgabe der Erfindung, die Nachteile des Bekannten zu vermeiden und eine Vorrichtung für die Voltammetrie zu schaffen, die das automatische Auswechseln der Indikatorelektrode ermöglicht. Dabei soll lediglich die Indikatorelektrode und nicht gleichzeitig auch die Referenzelektrode ausgewechselt werden. Diese Aufgabe wird erfindungsgemäss durch eine Vorrichtung für die Voltammetrie mit den Merkmalen von Anspruch 1 und durch ein Verfahren zur Durchführung einer voltammetrischen Analyse mittels einer solchen Vorrichtung gemäss den Merkmalen von Anspruch 17 gelöst.

Die Vorrichtung weist ein Gefäss zur Aufnahme einer zu analysierenden Flüssigkeit auf. In diesem Gefäss ist unterhalb des vorgesehenen Flüssigkeitsspiegels eine mit einer Messeinrichtung verbundene Referenzelektrode angeordnet. Handelt es sich um eine nach dem Drei-Elektroden-Prinzip arbeitende Analysevorrichtung, so ist neben der Referenzelektrode zusätzlich eine ebenfalls mit der elektrischen Messeinrichtung verbundene Hilfselektrode vorgesehen, welche ebenfalls unterhalb des vorgesehenen Flüssigkeitsspiegels in dem Gefäss angeordnet ist. Im weiteren sind mehrere Indikatorelektroden vorgesehen, von denen sich wenigstens eine selektierte Indikatorelektrode in dem für die Flüssigkeit vorgesehenen Bereich des Gefässes befindet. Im weiteren weist die Vorrichtung einen mit einer Ablaufsteuerung in Wirkverbindung stehenden Elektrodenwechsler auf, durch den die selektierte Indikatorelektrode durch eine der anderen Indikatorelektroden ersetzt werden kann. Dieser Elektrodenwechsler ermöglicht das automatische Austauschen der selektierten Indikatorelektrode. Solche Vorrichtungen sind z.B. für voltammetrische Reihenuntersuchungen geeignet, wobei von der Ablaufsteuerung neben dem Austauschen der Indikatorelektrode auch das Austauschen der zu analysierenden Flüssigkeit und die Durchführung der Messung gesteuert wird. Ausserdem sind Mittel vorgesehen, um die selektierte Indikatorelektrode mit der elektrischen Messeinrichtung zu verbinden.

Als Gefäss im Sinne vorliegender Erfindung ist jede Form eines Flüssigkeitsbehälters zu verstehen, in der Flüssigkeit batchweise oder kontinuierlich oder diskontinuierlich im Durchfluss eingebracht oder durchgelüftet wird. Die Erfindung lässt sich also z.B. auch in einem entsprechend angepassten Rohrabschnitt realisieren, der als Durchlaufgefäss dienen kann.

Bevorzugt wird eine Mikroelektrode als Indikatorelektrode eingesetzt. Die wirksame Elektrodenfläche einer Mikroelektrode beträgt höchstens 0,05 mm². Der bei der Voltammetrie ausgenutzte Effekt der Konzentrationspolarisation wird durch Indikatorelektroden mit kleiner Oberfläche in vorteilhafter Weise verstärkt. Häufig werden auch mehrere arrayförmig angeordnete Mikorelektroden untereinander elektrisch verbunden und zu einer Indikatorelektrode zusammengefasst. Solche Mikroelektroden lassen sich besonders einfach herstellen, indem ein Elektrodenmaterial mit einer dielektrischen Materialschicht überzogen wird. Dieser Überzug weist eine Öffnung auf, in deren Bereich das Elektrodenmaterial als wirksame Elektrodenfläche freiliegt. Bei einem Array von Mikroelektroden werden entsprechend mehrere arrayförmig angeordnete Öffnungen in der dielektrischen Materialschicht vorgesehen. Die gesamte Elektrodenfläche der Indikatorelektrode entspricht dabei der Summe aller in einem Array zusammengefassten Mikroelektrodenflächen. Anzahl, Grösse und Anordnung der Mikroelektroden eines Mikroelektroden-Arrays beeinflussen die mit der Analyse erreichbare Genauigkeit und Empfindlichkeit, dies ist jedoch nicht Gegenstand der vorliegenden Erfindung.

Der für den Indikatorelektroden-Wechsel notwendige Bewegungsablauf lässt sich wesentlich vereinfachen, wenn eine Indikatorelektroden-Anordnung mit mehreren Indikatorelektroden verwendet wird, welche auf einem gemeinsamen Träger angeordnet sind. Dieser gemeinsame Träger wird dann relativ zu dem Gefäss derart bewegbar gelagert, dass selektiv wenigstens eine der Indikatorelektroden in den für die Flüssigkeit vorgesehenen Bereich des Gefässes und mit der Flüssigkeit in Kontakt bringbar ist. Diese wird hier als die selektierte Indikatorelektrode bezeichnet. Das Auswechseln der selektierten Indikatorelektrode erfolgt durch Selektieren einer neuen Indikatorelektrode, welche sich auf demselben Träger befindet. Dazu wird der Träger relativ zu dem Gefäss bewegt, bis sich eine neue Indikatorelektrode in dem für die Flüssigkeit vorgesehenen Bereich befindet. Da sich alle Indikatorelektroden auf demselben Träger befinden, erfolgt die Zufuhr einer neuen Indikatorelektrode gleichzeitig mit dem Beseitigen der verbrauchten Indikatorelektrode durch einfaches Bewegen des Trägers. Zum automatischen Durchführen dieser Bewegung weist der Elektrodenwechsler einen mit dem Träger in Wirkverbindung stehenden Bewegungsantrieb auf. Da bei jedem Indikatorelektrodewechsel der gleiche, gemeinsame Träger bewegt werden muss, kann dieser auf einfache Weise mit dem Bewegungsantrieb verbunden werden.

Auch der zur Herstellung einer Indikatorelektrode notwendige Aufwand ist geringer, wenn mehrere solche Elektroden auf einem gemeinsamen Träger angeordnet werden. Dies ist insbesondere dann der Fall, wenn Indikatorelektroden verwendet werden, deren Elektrodenmaterial in der bereits beschriebenen Weise von einer dielektrischen Materialschicht überzogen ist. Die Öffnungen dieser Materialschicht bestimmen die wirksame Elektrodenfläche. Werden nun mehrere solche Elektroden auf einem gemeinsamen Träger angeordnet, so ergibt sich die Möglichkeit, alle Indikatorelektroden mit einer gemeinsamen dielektrischen Materialschicht zu überziehen. Dies ermöglicht ein vereinfachtes Fertigungsverfahren.

Zum automatischen Selektieren einer Indikatorelektrode oder zum automatischen Wechseln einer selektierten Indikatorelektrode ist der Bewegungsantrieb mit einer Ablaufsteuerung verbunden. Ist die Position der Indikatorelektrode auf dem Träger ausreichend genau bekannt, so kann die Positionierung durch das Steuern des Antriebs, z.B. anhand von Schrittmotoren, erfolgen. Alternativ dazu ist es auch möglich, die tatsächliche Position einer Indikatorelektrode mittels geeigneter Sensoren zu ermitteln und den Antrieb durch die Steuerung solange zu betätigen, bis die betreffende Indikatorelektrode in dem für die Flüssigkeit vorgesehenen Bereich ist. Die konkrete Gestaltung des Bewegungsantriebs ist abhängig von der Gestaltung der Indikatorelektroden-Anordnung und deren Anordnung in Bezug auf das Gefäss. Dazu gibt es verschiedene Möglichkeiten, von denen die bevorzugten im folgenden aufgeführt sind.

Bei einer ersten Variante weist das Gefäss in seinem oberen Bereich eine Öffnung auf, durch welche die zu analysierende Flüssigkeit erreichbar ist. Für die Analyse wird nun ein Teil der Indikatorelektroden-Anordnung in die Flüssigkeit eingetaucht und zwar so, dass nur die selektierte Indikatorelektrode mit der Flüssigkeit in Kontakt kommt. Der Träger wird bevorzugt in Form eines flexiblen Trägerbandes gestaltet, auf dem die einzelnen Indikatorelektroden, vorzugsweise in Längsrichtung des Bandes hintereinander liegend, angeordnet sind.

Der bandförmige Träger hat den Vorteil, dass er, aufgewickelt auf eine Spule, auch bei grosser Bandlänge wenig Platz einnimmt. So können Indikatorelektroden-Anordnungen mit einer Vielzahl von Indikatorelektroden hergestellt werden. Auf einer Vorratsspule ist ein Vorrat des Elektrodenbands aufgewickelt, und es sind Mittel vorgesehen, um das Trägerband von der Vorratsspule abzuziehen und selektiv eine der Indikatorelektroden in den für die Flüssigkeit vorgesehenen Bereich des Gefässes zu bringen. Eine einfache Möglichkeit ist die Verwendung einer Zugspule. Das äussere Ende des auf der Vorratsspule aufgewickelten Trägerbandes wird dabei so mit der Zugspule verbunden, dass es durch Drehen der Zugspule auf diese auf- und von der Vorratsspule abwickelbar ist. Das Band liegt dabei zwischen den beiden Spulen teilweise im für die Flüssigkeit vorgesehenen Bereich und durch Drehen der Zugspule ist die Indikatorelektrode sequentiell in diesen Bereich des Gefässes bringbar. Bei dieser Ausführungsform lässt sich der zur Automation notwendige Bewegungsantrieb besonders einfach realisieren, nämlich durch einen auf die Zugspule wirkenden Drehantrieb.

Auch wenn es darum geht, eine der Indikatorelektroden in den für die Flüssigkeit vorgesehenen Bereich des Gefässes zu bringen, hat das flexible Trägerband entscheidende Vorteile: dieses kann nämlich in seiner Längsrichtung durch geeignete Führungselemente, wie z.B. Umlenkrollen, so geführt werden, dass ein Abschnitt des Bandes in dem für die Flüssigkeit vorgesehenen Bereich des Gefässes verläuft. Durch Bewegen des Bandes in Längsrichtung kann dieser selektierte Bandabschnitt so gewählt werden, dass sich wenigstens eine Indikatorelektrode in dem für die Flüssigkeit vorgesehenen Bereich befindet.

Bei einer alternativen Ausführungsvariante wird der der Flüssigkeit ausgesetzte Bereich des gemeinsamen Trägers stärker auf die selektierte Indikatorelektrode beschränkt. Das Gefäss weist dabei unterhalb des vorgesehenen Flüssigkeitsspiegels eine Öffnung auf. Im weiteren sind Mittel vorgesehen, um den Träger bei selektierter Indikatorelektrode flüssigkeitsdicht mit der Gefässöffnung in Eingriff zu bringen. Gefässöffnung und Träger werden mit Vorteil so ausgelegt, dass der Träger beim Elektrodenwechsel keine komplizierte Bewegung machen muss. Dies wird z.B. erreicht, wenn der öffnungsrand der Gefässöffnung etwa in einer Öffnungsebene liegt. Der Träger ist dabei so gestaltet, dass er eine Fläche aufweist, in der die Indikatorelektroden liegen und ist so angeordnet, dass diese Fläche im Bereich der Gefässöffnung gegen die Öffnung gerichtet ist, parallel zu der Öffnungsebene steht und zum Selektieren einer Indikatorelektrode parallel zu der Öffnungsebene bewegbar ist. Dabei müssen nicht alle auf dem Träger angeordneten Indikatorelektroden in einer Ebene liegen. Lediglich im Bereich der Gefässöffnung muss die Fläche mit den Indikatorelektroden parallel zu der Öffnungsebene stehen. Es kann sich also zum Beispiel um einen Träger in Form eines flexiblen Trägerbands handeln, das lediglich im Bereich der Gefässöffnung parallel zu dieser verläuft.

Das Bewegen des Trägers parallel zu der Öffnungsebene wird wesentlich erleichtert, wenn dieser die Gefässöffnung dabei nicht berührt. Die Gefässöffnung wird daher bevorzugt während dem Wechseln der Indikatorelektrode von dem Träger abgehoben. Dies wird durch eine senkrecht zu der Öffnungsebene bewegbare Lagerung des Gefässes ermöglicht. Dadurch ist es gleichzeitig möglich, das Gefäss zum Abdichten der Öffnung bei selektierter Indikatorelektrode senkrecht zu der Öffnungsebene gegen den Träger zu pressen. Zum Erzeugen einer Anpresskraft kann dabei das Eigengewicht des Gefässes oder z.B. eine vorgespannte Feder verwendet werden. Zur Verbesserung der Dichteigenschaft kann die Gefässöffnung mit einem elastischen Dichtring versehen werden. Auch durch einen Träger aus elastischem Material oder eine den Träger überziehende elastische, dielektrische Materialschicht wird die Dichtigkeit erhöht.

Um den Träger bei selektierter Indikatorelektrode dicht mit der Gefässöffnung in Eingriff zu bringen, kann ein Anpresselement verwendet werden. Das Anpresselement hat eine flächige Pressfläche, welche grösser als die Gefässöffnung ist und im Bereich dieser Öffnung parallel zu der Öffnungsebene steht. Der Träger liegt zwischen der Pressfläche und der Gefässöffnung. Er ist durch die als Widerlager dienende Pressfläche bei selektierter Indikatorelektrode dicht mit der Gefässöffnung in Eingriff bringbar. Zu diesem Zweck kann z.B. der Abstand zwischen Pressfläche und Öffnungsebene veränderbar sein. Oder bei konstantem Abstand kann eine vorgespannte, elastische Dichtung verwendet werden, um die Öffnung abzudichten.

In Kombination mit der vorstehend beschriebenen Gefässöffnung werden bevorzugt Träger mit einer ebenen Fläche verwendet, auf der die Indikatorelektroden angeordnet sind. Diese Fläche wird bei selektierter Indikatorelektrode dicht mit der Gefässöffnung in Eingriff gebracht. Die Indikatorelektroden werden dabei bevorzugt so auf dem Träger angeordnet, dass dieser beim Elektrodenwechsel in nur eine Richtung bewegt werden muss. Dies führt zu einem mechanisch einfachen Aufbau der Vorrichtung. Dabei kann es sich z.B. um eine lineare Bewegung oder um eine Drehbewegung handeln, wobei der Träger eine Scheibe ist und die Indikatorelektroden auf einer Seitenfläche der Scheibe angeordnet sind. Die Scheibe ist dabei in der Scheibenebene verlagerbar, insbesondere drehbar gelagert. Sie ist gegenüber dem Gefäss so angeordnet, dass ihre die Elektrodenflächen aufweisende Seitenfläche parallel zu der Öffnungsebene der Gefässöffnung steht und gegen diese gerichtet ist. Auf einem solchen scheibenförmigen Träger können vergleichsweise viele Indikatorelektroden auf kleinem Raum angeordnet werden. Als Bewegungsantrieb für den automatischen Elektrodenwechsel wird bei dieser Ausführungsform vorzugsweise ein mit der Scheibe gekoppelter Linear- oder Drehantrieb verwendet.

Auch Indikatorelektroden-Anordnungen mit einem bandförmigen Träger können in Kombination mit der genannten Gefässöffnung verwendet werden. Das Trägerband hat zwei Breitflächen und die Indikatorelektroden sind auf einer der zwei Breitflächen des Trägerbands angeordnet. Auf einer Vorratsspule ist ein Vorrat dieses Trägerbands aufgewickelt und es sind Mittel vorgesehen, um das Trägerband von der Vorratsspule abzuziehen und selektiv die Elektrodenfläche von einer der Indikatorelektroden in den Bereich der Gefässöffnung zu bringen. Dazu wird bevorzugt eine Zugspule der bereits beschriebenen Art verwendet.

Sind alle auf einem Träger angeordneten Indikatorelektroden aufgebraucht, so muss die Indikatorelektroden-Anordnung ausgewechselt werden. Bei der Lagerung des Trägers ist daher darauf zu achten, dass er leicht auswechselbar ist. Bevorzugt werden dazu leicht lösbare, form- und/oder kraftschlüssige Verbindungselemente, wie z.B. Schnappverbindungen, verwendet. Im Apparatebau sind eine Vielzahl solcher Verbindungselemente bekannt und gebräuchlich.

Bei Verwendung einer Indikatorelektroden-Anordnung in Form eines Trägerbands, mit einer Vorratsspule und einer Zugspule wie vorstehend beschrieben, gestaltet sich das Auswechseln des Elektrodenbands am einfachsten, wenn Vorratsspule und Zugspule als Teil einer Bandkassette in einem Kassettengehäuse drehbar gelagert sind. Sind alle auf dem Band befindlichen Indikatorelektroden verbraucht, so kann die Bandkassette als Ganzes entfernt und durch eine neue Kassette mit neuen Indikatorelektroden ersetzt werden. Diese Ausführungsform hat mehrere wesentliche Vorteile: die Bandkassette ist als selbständige Einheit einfach auswechselbar. Durch die bandförmige Gestaltung des Trägers kann eine sehr grosse Anzahl von Indikatorelektroden auf geringem Raum, aufgewickelt auf eine Vorratsspule, untergebracht werden. Damit ist auch bei häufigem Elektrodenwechsel ein vollautomatischer Analysebetrieb möglich, wobei z.B. während einer Nachtschicht mehrere hundert Indikatorelektroden verbraucht werden können. Im weiteren gestaltet sich das Auswechseln der selektierten Indikatorelektroden besonders einfach, da zum Weitertransportieren der Indikatorelektroden lediglich ein Drehantrieb benötigt wird.

Die selektierte Indikatorelektrode muss, wie auch die zweite an der Analyse beteiligte Referenzelektrode, mit der elektrischen Messeinrichtung verbunden werden. Dazu wird vorzugsweise ein elektrisches Kontaktelement verwendet. Jede Indikatorelektrode ist einem elektrischen Kontaktelement zugeordnet und mit diesem elektrisch verbunden. An der Vorrichtung sind Mittel vorgesehen, um das Kontaktelement der selektierten Indikatorelektrode mit der elektrischen Messeinrichtung zu verbinden. Die Art dieses Kontaktelements sowie dessen Verbindung mit der elektrischen Messeinrichtung ist primär von der Konstruktion der Indikatorelektroden-Anordnung abhängig. Weist diese lediglich ein einziges Kontaktelement auf, mit dem alle Indikatorelektroden verbunden sind, so wird bevorzugt ein zuverlässiger Steckkontakt verwendet, um dieses mit der Messeinrichtung zu verbinden. Dabei kann es sich z.B. um eine Indikatorelektroden-Anordnung handeln, deren Träger ein elektrischer Leiter ist, welcher für alle Mikroelektroden als gemeinsames Kontaktelement dient. Dabei ergibt sich ein besonders einfacher Aufbau der Indikatorelektroden-Anordnung.

Um zu verhindern, dass unterschiedliche Leitungslängen oder an der Messung nicht beteiligte Indikatorelektroden das Messresultat beeinflussen, können Indikatorelektroden-Anordnungen verwendet werden, die gleich viele elektrische Kontaktelemente wie Indikatorelektroden aufweisen. Dabei ist jedes Kontaktelement genau einer Indikatorelektrode zugeordnet und mit dieser verbunden. In diesem Fall muss bei jedem Elektrodenwechsel das Kontaktelement der neu selektierten Indikatorelektrode mit der Messeinrichtung verbunden werden. Z.B. kann das Kontaktelement eine elektrisch leitende Fläche sein, wobei ein elektrischer Taster vorgesehen ist, welcher das Kontaktelement der selektierten Indikatorelektrode abtastet und elektrisch mit der Messeinrichtung verbindet. Der Taster kann insbesondere bei automatischem Elektrodenwechsel einfacher mit dem Kontaktelement der neu selektierten Indikatorelektrode in Kontakt gebracht werden, als dies z.B. mit einer Steckverbindung möglich wäre.

Das einer Mikroelektrode zugeordnete Kontaktelement muss auf der Mehrfachelektrode so angeordnet sein, dass es bei selektierter Indikatorelektrode nicht mit der zu untersuchenden Flüssigkeit in Kontakt kommt. Das Kontaktelement wird daher häufig von der Mikroelektrode abgesetzt angeordnet. Die elektrische Verbindung zwischen Elektrode und Kontaktelement kann z.B. durch eine zwischen dem Träger und der elektrischen Materialschicht liegende Leiterbahn hergestellt werden. Das Kontaktelement kann dabei einstückig mit der Leiterbahn verbunden sein und gemeinsam mit dieser in einem Arbeitsgang hergestellt werden. Dies fügt sich gut in den Herstellungsprozess von Mikroelektroden ein, bei dem die Verwendung von Schichttechnologien üblich ist. Die Leiterbahn kann z.B. durch ein Siebdruckverfahren in Dickschichttechnologie hergestellt werden.

Im Vergleich zu einzelnen Indikatorelektroden lässt sich eine Indikatorelektroden-Anordnung mit mehreren, auf einen gemeinsamen Träger angeordneten Indikatorelektroden wesentlich kostengünstiger produzieren. Z.B. können alle Indikatorelektroden eine gemeinsame, dielektrische Materialschicht aufweisen. Bei einem bevorzugten Produktionsprozess wird von einer Kunststoffolie ausgegangen, welche als dielektrische Materialschicht dient. Die Dicke der Kunststoffolie liegt vorzugsweise zwischen 10 µm und 100 µm, ein für die Bearbeitung durch Fotoablation geeignetes Material ist Polyester. In diese Materialschicht werden zunächst mit einem Laserstrahl durch Fotoablation kleine, durchgehende Löcher gemacht. Dabei wird für jede Indikatorelektrode wenigstens ein solches Loch gemacht; der Bereich des Loches stellt später die Elektrodenfläche dar. Bei der Herstellung von Mikroelektroden-Arrays werden mehrere Löcher vorgesehen, welche bei einem Lochdurchmesser von vorzugsweise 20 µm - 40 µm und einem Loch-zu-Loch-Abstand von vorzugsweise 100 µm - 300 µm arrayförmig angeordnet sind. Alternativ dazu ist es auch möglich, an Stelle der runden Löcher längliche Schlitze oder andere Lochformen zu verwenden. Danach wird auf einer Seite der Kunststoffolie eine elektrisch leitende Paste oder Flüssigkeit aufgetragen. Bevorzugt wird eine Flüssigkeit verwendet, welche nach dem Auftragen aushärtet, z.B. eine kohle- oder metallhaltige Flüssigkeit, die bei niedrigen Temperaturen aushärtbar ist. Diese dient als Elektrodenmaterial, welches auf der anderen Seite der Kunststoffolie im Bereich der vorher angebrachten Löcher als Elektrodenfläche freiliegt. Grösse und Anzahl der Löcher pro Indikatorelektrode bestimmen die Grösse der Elektrodenfläche. Anschliessend wird die mit Elektrodenmaterial beschichtete Kunststoffolie auf einen Träger aufgebracht, so dass das Elektrodenmaterial zwischen der Kunststoffolie und dem Träger liegt. Als Träger wird in der Regel ebenfalls dielektrisches Material verwendet. Bei einem bandförmigen Träger ist darauf zu achten, dass das Band flexibel bleibt, so dass es auf eine Spule aufgewickelt werden kann. Als Träger wird dabei bevorzugt ein Kunststoff-Film verwendet, dessen Dicke vorzugsweise zwischen 0,1 mm und 1 mm liegt. Dazu kann jeder mechanisch flexible Kunststoff verwendet werden, z.B. Polyester. Das Elektrodenmaterial kann gleichzeitig als Leiterbahn dienen, um die Indikatorelektrode mit einem Kontaktelement zu verbinden. Dabei kann es sich z.B. um eine auf dem Träger angeordnete, elektrisch leitende Schicht handeln. Alternativ dazu kann auch das Elektrodenmaterial selbst als Kontaktelement dienen.

Die beschriebene Vorrichtung für die Voltammetrie eignet sich auf Grund der automatisch auswechselbaren Indikatorelektrode insbesondere für die Durchführung von voltammetrischen Reihenuntersuchungen. Dabei werden nacheinander eine Mehrzahl von Flüssigkeiten analysiert, wobei jeweils nach Beendigung einer Messung die analysierte Flüssigkeit aus dem Gefäss entfernt und durch eine neue zu analysierende Flüssigkeit ersetzt wird. Sowohl das Auswechseln dieser Flüssigkeit, als auch das Auswechseln der Indikatorelektrode erfolgt automatisch und wird durch die Ablaufsteuerung kontrolliert. Das Auswechseln der Indikatorelektrode erfolgt nach vorbestimmbaren Abläufen, wie z.B. dem Erreichen der maximalen Betriebsdauer einer Indikatorelektrode oder dem Erreichen der maximalen Anzahl Messungen, die mit derselben Indikatorelektrode durchgeführt werden sollen. Bevorzugt wird eine Ablaufsteuerung mit einer Eingabevorrichtung verwendet, an der die zur Bestimmung des Zeitpunkts für den Elektrodenwechsel notwendigen Parameter eingestellt werden können.

Der Kontakt zwischen der zu untersuchenden Flüssigkeit und der kleinen Elektrodenfläche wird verbessert, wenn die Oberfläche der dielektrischen Materialschicht wenigstens in dem an die Elektrodenfläche angrenzenden Bereich aufgerauht wird. Sie wird dadurch stärker hydrophil. Das Aufrauhen erfolgt vorzugsweise mit dem Laserstrahl, durch den auch die Öffnungen für die Elektrodenfläche erzeugt werden.

Die Erfindung ist im folgenden anhand von Beispielen näher erläutert, es zeigen:
- Figur 1: die schematische Darstellung einer vollautomatischen Voltammetrievorrichtung,
- Figur 2: die schematische Darstellung einer Voltammetrievorrichtung mit in einer Bandkassette integriertem Trägerband,
- Figur 3: die schematische Darstellung eines Ausschnitts der Vorrichtung gemäss Figur 2,
- Figur 4: den Ausschnitt eines Trägerbands in schematischer Darstellung,
- Figur 5: den Ausschnitt eines alternativen Trägerbands in schematischer Darstellung,
- Figur 6: die schematische Darstellung einer Voltammetrievorrichtung mit in einer Bandkassette integriertem Trägerband,
- Figur 7: die schematische Darstellung einer Voltammetrievorrichtung mit eintauchendem Trägerband, und
- Figur 8: die schematische Darstellung einer alternativen Ausführungsform einer Voltammetrievorrichtung mit einem Indikatorelektrodenwechsler.

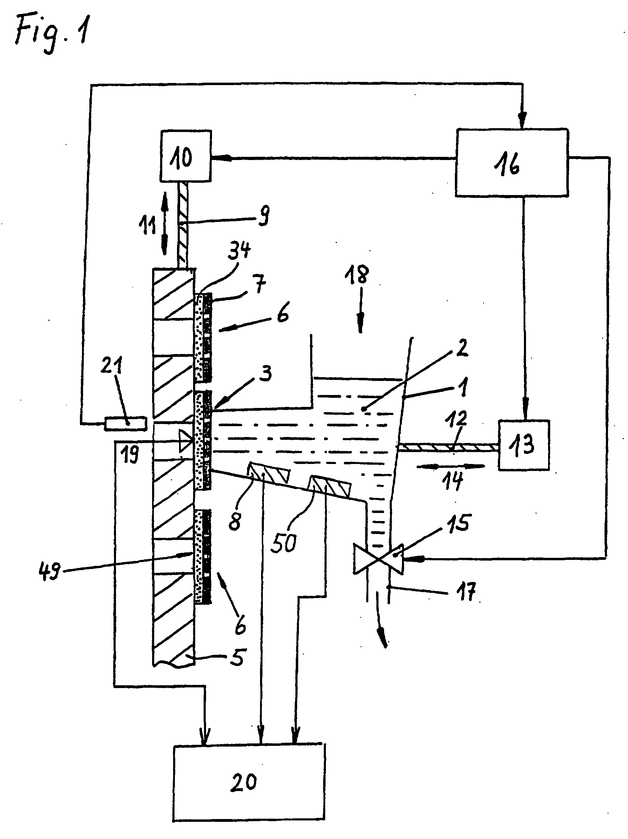

In Figur 1 ist eine Vorrichtung für die vollautomatische Voltammetrie schematisch dargestellt. Sie weist ein Gefäss 1 für die Aufnahme der zu analysierenden Flüssigkeit 2 auf. Dieses Gefäss hat in seinem für die Flüssigkeit vorgesehenen Bereich eine Öffnung, deren Öffnungsrand 3 etwa in einer Ebene liegt. Ausserhalb des Gefässes 1 ist eine Indikatorelektroden-Anordnung vorgesehen. Diese besteht aus einem Träger 5, auf dem mehrere Indikatorelektroden 6, bestehend aus von einer dielektrischen Materialschicht 7 überzogenem Elektrodenmaterial 34, angeordnet sind. Der Träger ist in Achsrichtung 11 bewegbar gelagert. Durch Bewegen der Indikatorelektroden-Anordnung in dieser Richtung ist eine beliebige der auf dem Träger angeordneten Indikatorelektroden in den Bereich der Gefässöffnung bringbar. Dieser Vorgang wird auch als Selektieren bezeichnet. Die selektierte Indikatorelektrode befindet sich im Bereich der Gefässöffnung und damit in dem für die Flüssigkeit vorgesehenen Bereich des Gefässes. Wird eine zu untersuchende Flüssigkeit in das Gefäss eingefüllt, so kommt sie mit der selektierten Indikatorelektrode in Kontakt. Die Indikatorelektroden-Anordnung ist so gestaltet und angeordnet, dass sie bei selektierter Indikatorelektrode flüssigkeitsdicht mit der Gefässöffnung in Eingriff bringbar ist. Zu diesem Zweck ist das Gefäss senkrecht zu der Öffnungsebene in Achsrichtung 14 bewegbar gelagert. Es kann daher bei selektierter Indikatorelektrode zum Abdichten der Gefässöffnung gegen die Indikatorelektroden-Anordnung gepresst werden. Während dem Wechseln der Indikatorelektrode wird es in entgegengesetzter Richtung bewegt und von dem Träger abgehoben, so dass dieser in Achsrichtung 11 frei bewegbar ist.

Die Abbildung zeigt die Vorrichtung bei selektierter Indikatorelektrode und mit eingefüllter, zu analysierender Flüssigkeit 2. Für die Messung nach dem Drei-Elektroden-Prinzip sind ausserdem eine Referenzelektrode 8 und eine Hilfselektrode 50 notwendig, welche innerhalb des Gefässes 1 angeordnet sind. Diese sind, wie auch die Indikatorelektrode, mit der elektrischen Messeinrichtung 20 verbunden. Die Indikatorelektrode ist dazu mit einem Kontaktelement verbunden, welches von dem elektrischen Taster 19 abgetastet und so mit der Messeinrichtung verbunden wird. In diesem Beispiel dient das an der Rückseite der Indikatorelektrode freiliegende Elektrodenmaterial 34 gleichzeitig als Kontaktelement 49. Der Träger 5 weist im Bereich der Indikatorelektrode eine Öffnung auf, so dass das Kontaktelement 49 durch den Taster 19 erreichbar ist.

Nach Beendigung der Messung wird das Gefäss 1 entleert. Daraufhin kann eine neue zu untersuchende Flüssigkeit eingefüllt werden und eine neue Messung kann beginnen. Zum Entleeren des Gefässes ist eine Absaugleitung 17 vorgesehen; das Einfüllen einer neuen Flüssigkeit erfolgt durch die Einfüllöffnung 18. Die Indikatorelektrode muss nicht unbedingt nach jeder Messung ausgewechselt werden, dies ist abhängig von der geforderten Messgenauigkeit und der zu untersuchenden Flüssigkeit.

Ein besonderer Vorteil der auf einem gemeinsamen Träger angeordneten Indikatorelektroden ist die einfache Möglichkeit zur vollständigen Automatisierung der Analyse. Eine Vielzahl von Flüssigkeiten können so ohne die Anwesenheit einer Bedienperson z.B. während der Nacht vollautomatisch analysiert werden. Das Wechseln der Indikatorelektrode spielt dabei eine wesentliche Rolle. Der Träger ist zu diesem Zweck über eine Wirkverbindung 9 mit einem Bewegungsantrieb 10 verbunden, welcher das automatische Bewegen des Trägers in Achsrichtung 11 erlaubt. Im weiteren ist das Gefäss 1 über eine Wirkverbindung 12 mit einem Bewegungsantrieb 13 verbunden, welcher das Bewegen des Gefässes in Achsrichtung 14 und somit das Anpressen bzw. Abheben der Gefässöffnung von dem Träger erlaubt. Die automatische Analyse wird von einer Steuerung 16 kontrolliert, welche mit den Bewegungsantrieben 10 und 13 in Wirkverbindung steht. Sie ist im weiteren mit einem Ventil 15 in der Absaugleitung 17 verbunden, so dass auch das Entleeren des Gefässes 1 kontrolliert durch die Steuerung 16 erfolgen kann. Soll die Indikatorelektrode nach einer Messung ausgewechselt werden, spielt sich folgender Vorgang ab: Zunächst wird durch die Steuerung 16 das Ventil 15 betätigt und die im Gefäss befindliche Flüssigkeit wird via Absaugleitung 17 abgesaugt. Daraufhin wird durch die Steuerung 16 der Bewegungsantrieb 13 aktiviert und das Gefäss senkrecht zur Öffnungsebene von dem Träger abgehoben. In einem nächsten Schritt wird durch die Steuerung 16 der Bewegungsantrieb 10 aktiviert, so dass sich der Träger in Achsrichtung 11 bewegt. Diese Bewegung wird solange fortgesetzt, bis sich eine neue Indikatorelektrode im Bereich der Gefässöffnung befindet. Dazu ist ein Positionssensor 21 vorgesehen, welcher an die Steuerung 16 ein Signal übermittelt, sobald sich eine Indikatorelektrode im Bereich der Gefässöffnung befindet. Auf einen solchen Positionssensor kann auch verzichtet werden, sofern die Position der Elektroden auf dem Träger genau bekannt ist. In diesem Fall kann die Positionierung auch über eine reine Positionssteuerung von Antrieb 10 erfolgen, z.B. mittels Schrittmotoren. Ist die neue Indikatorelektrode positioniert, so wird wiederum der Bewegungsantrieb 13 aktiviert, diesmal in der anderen Richtung, so dass das Gefäss senkrecht zur Öffnungsebene in Achsrichtung 14 gegen die Indikatorelektroden-Anordnung gepresst wird und mit dieser eine Abdichtung bildet. Daraufhin kann durch die Einfüllöffnung 18 eine neue zu untersuchende Flüssigkeit eingefüllt werden. Auch dies erfolgt automatisch durch eine nicht gezeichnete, von Steuerung 16 angesteuerte Pipettiervorrichtung.

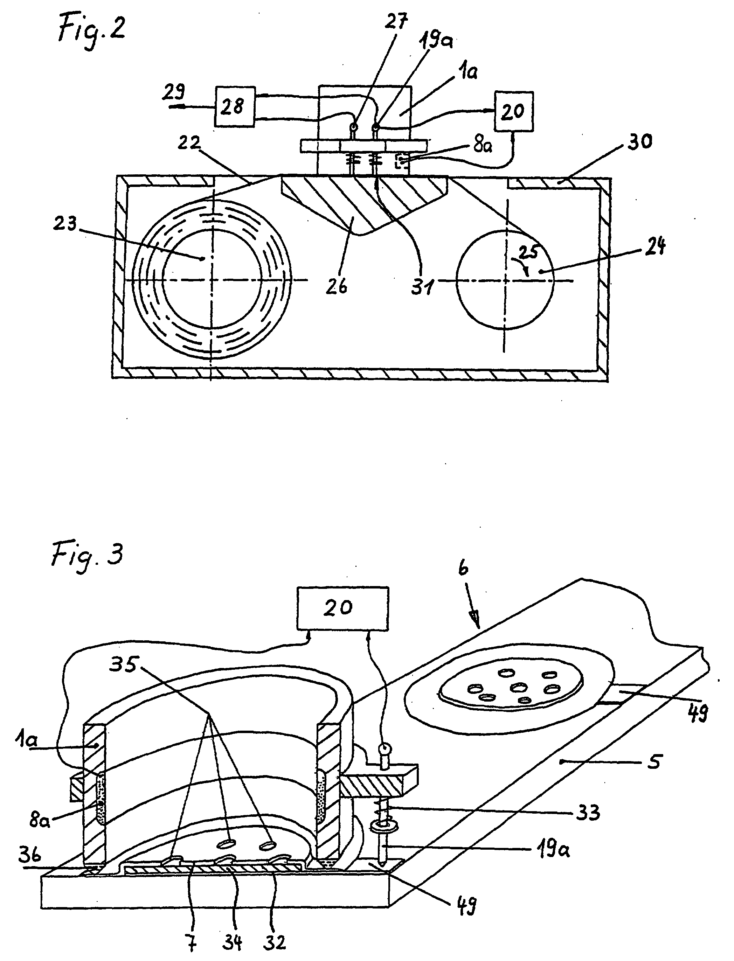

Die in Figur 2 gezeigte Voltammetrievorrichtung weist ein Gefäss 1a in Form eines zylindrischen Rohrabschnitts auf, welches auf einer bandförmigen Indikatorelektroden-Anordnung steht. Das Trägerband und das darauf stehende Gefäss ist in Figur 3 deutlicher gezeichnet. Die beiden Enden des rohrförmigen Gefässes 1a sind offen. Es steht in seiner Achsrichtung vertikal auf dem Trägerband, wobei die obere Öffnung die Einfüllöffnung ist und die untere Öffnung mit dem Trägerband füssigkeitsdicht in Eingriff bringbar ist. In Figur 2 nicht sichtbar sind die Indikatorelektroden, welche auf dem Trägerband 22 in Längsrichtung des Bandes hintereinander angeordnet sind.

Auch bei der dreidimensionalen Darstellung gemäss Figur 3, welche einen Ausschnitt der in Figur 2 dargestellten Vorrichtung zeigt, handelt es sich um eine schematische Darstellung. Insbesondere sind die Grössenverhältnisse der einzelnen Elemente nicht realitätsgetreu wiedergegeben. Z.B. sind die Elektrodenflächen 35 der aus einem Array von Mikroelektroden bestehenden Indikatorelektrode im Vergleich zu dem Gefäss 1a und der darin enthaltenen Referenzelektrode 8a in Wirklichkeit wesentlich kleiner. Auf dem gezeigten Bandausschnitt sind zwei Indikatorelektroden sichtbar, von denen die eine, wie auch das darauf angeordnete Gefäss 1a, im Schnitt dargestellt ist.

Die hier gezeigten Indikatorelektroden bestehen aus elektrisch leitendem Material 34, welches z.B. im Siebdruckverfahren auf den Träger 5 aufgetragen und anschliessend mit einer dielektrischen Materialschicht 7 überzogen wurde. Dabei handelt es sich bevorzugt um einen Polymerfilm, der z.B. durch Dampfpolymerisation aufgetragen wird. Der Indikatorelektrode ist ferner eine Leiterbahn 32 zugeordnet. Diese befindet sich auf dem Träger 5 und erstreckt sich bis unter das Elektrodenmaterial 34. Ihr äusseres, freiliegendes Ende dient als Kontaktelement 49, welches ausserhalb des Gefässes 1a mit einem Taststift 19a abgetastet werden kann, um das Elektrodenmaterial 34 elektrisch mit der Messeinrichtung 20 zu verbinden. Der im Haltering 47 axial verschiebbar gelagerte Taststift 19a ist durch eine Feder 33 mit einer Federkraft belastet und wird durch diese Feder 33 gegen das Kontaktelement 49 gepresst. Die Leiterbahn 32 verläuft im Bereich der Gefässöffnung zwischen der dielektrischen Materialschicht 7 und dem Träger 5 und wird daher der zu untersuchenden Flüssigkeit nicht ausgesetzt.

Die dielektrische Materialschicht weist mehrere Löcher auf, in deren Bereich das elektrisch leitende Material 34 als Elektrodenfläche der Indikatorelektrode freiliegt. Die Referenzelektrode 8a ist an der Innenwand von Gefäss 1a befestigt und durch eine elektrische Leitung ebenfalls mit der Messeinrichtung 20 verbunden. Um eine Flüssigkeit zu analysieren, muss diese in ausreichender Menge in das Gefäss eingefüllt werden, so dass neben der Indikatorelektrode auch die Referenzelektrode 8a mit der Flüssigkeit in Kontakt kommt. Das Entleeren des Gefässes nach erfolgter Analyse kann auf verschiedene Arten geschehen, am einfachsten durch Anheben des Gefässes 1a oder analog dazu durch Absenken des Trägerbands. Die Gefässöffnung gerät dabei ausser Eingriff mit dem Trägerband und die Flüssigkeit kann ausfliessen. Alternativ dazu kann die Flüssigkeit auch durch eine hier nicht gezeigte Absaugvorrichtung abgesaugt werden, welche z.B. durch die obere Gefässöffnung in dieses eingeführt werden kann. Solche Absaugvorrichtungen werden in automatischen Geräten für die chemische Analyse bereits seit geraumer Zeit eingesetzt.

Zum Wechseln der Indikatorelektrode ist es bei diesem Beispiel notwendig, dass die Gefässöffnung von dem Trägerband abgehoben wird. Das Gefäss 1a ist zu diesem Zweck an einer nicht dargestellten Halterung vertikal bewegbar gelagert. Als Alternative dazu wäre es auch möglich, das Gefäss festzuhalten und das Trägerband entsprechend abzusenken. Dieses wird daraufhin in Längsrichtung des Bandes parallel zu der Öffnungsebene bewegt, bis sich eine neue Indikatorelektrode im Bereich der Gefässöffnung befindet.

Wie aus Figur 2 ersichtlich, ist eine Vorratsspule 23 vorgesehen, auf der ein Vorrat an Trägerband 22 aufgewickelt ist. Im weiteren ist eine Zugspule 24 vorgesehen und das äussere Ende des auf der Vorratsspule aufgewickelten Trägerbands ist so mit der Zugspule 24 verbunden, dass es durch Drehen derselben in Drehrichtung 25 auf diese auf- und von der Vorratsspule abwickelbar ist. Zwischen den beiden Spulen läuft das Trägerband über ein Führungselement 26. Dieses Führungselement 26 erfüllt gleichzeitig die Funktion eines Anpresselements. Es weist eine Pressfläche 31 auf, welche im Bereich der Gefässöffnung parallel zu der Öffnungsebene steht. Diese dient als Widerlager für das Trägerband, wenn das Gefäss zum Abdichten der Öffnung gegen das Trägerband 22 gepresst wird. Das Trägerband 22 verläuft, geführt von Führungselement 26, im Bereich der Gefässöffnung parallel zu der Öffnungsebene. Das Bewegen des Trägerbands zum Selektieren einer Indikatorelektrode erfolgt durch Drehen der Zugspule in Drehrichtung 25. Zur Automatisierung des Elektrodenwechsels wird ein auf die Zugspule 24 wirkender Drehantrieb verwendet, welcher in seiner Funktion dem in Figur 1 gezeigten Bewegungsantrieb 10 entspricht. Um die Positionierung einer Indikatorelektrode im Bereich der Gefässöffnung zu detektieren, ist neben dem elektrischen Taster 19a ein zweiter elektrischer Taster 27 vorgesehen. Die in Figur 3 gezeigte Leiterbahn 32 ist so breit, dass die beiden Taststifte 19a und 27 die Leiterbahn 32 gleichzeitig berühren, wenn die Indikatorelektrode sich im Bereich der Gefässöffnung befindet. Die beiden Taststifte sind mit einem Positionsdetektor 28 verbunden, welcher das Eintreffen dieses Ereignisses z.B. durch eine Widerstandsmessung detektiert und daraus ein Positionssignal 29 erzeugt. Dies entspricht dem in Figur 1 gezeigten Positionssensor 21, das Positionssignal 29 ist mit einer in Figur 2 nicht gezeigten, für die Koordination des Elektrodenwechsels zuständigen Steuerung verbunden.

Die Vorratsspule 23 und die Zugspule 24 sind als Teil einer Bandkassette in einem Kassettengehäuse 30 drehbar gelagert. Im Bereich des Führungselements 26 ist das Trägerband von ausserhalb des Kassettengehäuses zugänglich, dies ist der Arbeitsbereich der Bandkassette. In diesem Beispiel verläuft das Band 22 im Arbeitsbereich ausserhalb des Kassettengehäuses 30.

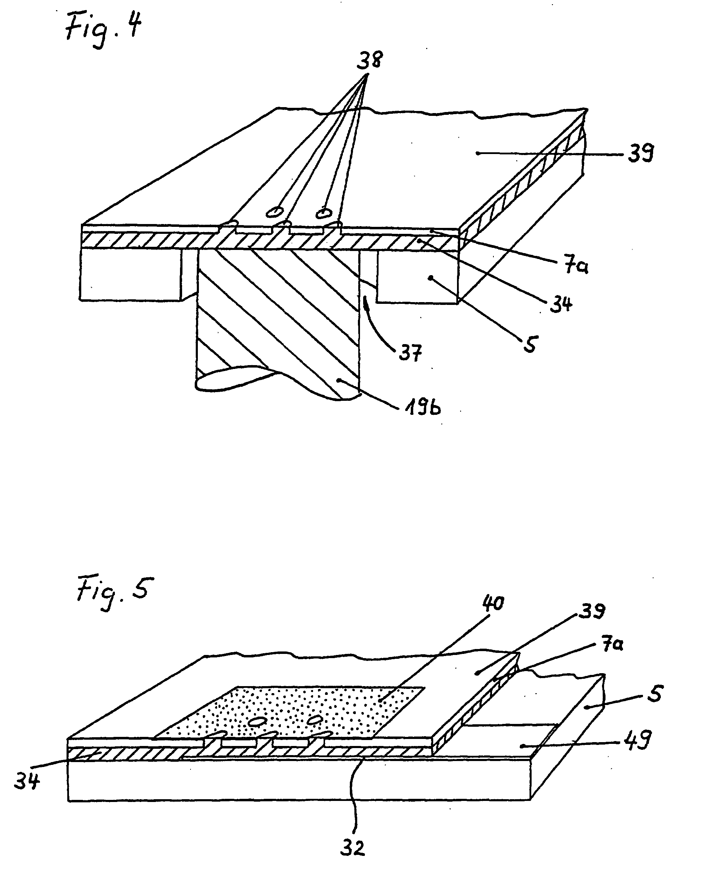

Figur 4 zeigt den Ausschnitt einer bandförmigen Indikatorelektroden-Anordnung in schematischer Darstellung. Das Trägerband weist im Unterschied zu dem in Figur 3 Gezeigten eine ebene Aussenfläche 39 auf, in der die Elektrodenflächen 38 liegen. Bei dieser Art von Indikatorelektroden-Anordnung kann auf das Abheben der Gefässöffnung während dem Elektrodenwechsel verzichtet werden. Die Verschiebung des Trägerbands ist möglich, auch wenn dieses mit der Gefässöffnung in Eingriff bleibt. Ein weiterer Vorteil dieser Elektrodenform ist ihre einfache Herstellung. Alle Indikatorelektroden, von denen allerdings nur eine gezeichnet ist, sind von einer gemeinsamen dielektrischen Materialschicht 7 überzogen, welche sich über die gesamte Bandlänge erstreckt. Dadurch entfällt das aufwendige Polymerisieren der dielektrischen Schicht, es kann ein durchgehendes Kunststoffband verwendet werden. Bei der Herstellung dieser Indikatorelektroden-Anordnung werden zunächst in ein dünnes Band aus dielektrischem Material kleine Löcher gemacht. Bevorzugt wird ein Kunststoffband verwendet und die Löcher werden durch einen Laserstrahl mittels Photoablation erzeugt. In einem zweiten Schritt wird elektrisch leitendes Material 34 auf eine Seite der dielektrischen Matenalschicht aufgetragen. Es wird dabei im Bereich der Löcher in diese hineingedrückt, so dass es auf der anderen Seite der dielektrischen Materialschicht 7 als Elektrodenfläche 39 freiliegt. Anzahl, Abstand und Grösse der Mikrolöcher definieren den Charakter der Indikatorelektrode. Als Elektrodenmaterial wird bevorzugt eine metall- oder kohlenhaltige Flüssigkeit verwendet, welche nach dem Auftragen bei niedrigen Temperaturen von vorzugsweise 60 - 80 °C aushärtbar ist. Dieses Band wird danach mit einem dickeren Trägerband 5 verbunden, so dass die Schicht 34 aus elektrisch leitendem Material zwischen der dielektrischen Materialschicht 7a und dem Träger 5 liegt. Bei diesem Beispiel weist der Träger 5 im Bereich der Indikatorelektrode eine Aussparung 37 auf, so dass das Elektrodenmaterial 34 im Bereich dieser Aussparung freiliegt und gleichzeitig als Kontaktelement verwendet werden kann. Um die Indikatorelektrode elektrisch mit der Messeinrichtung zu verbinden, ist ein elektrischer Taster 19b vorgesehen, welcher in die Aussparung 37 hineinragt und das als Kontaktelement dienende Elektrodenmaterial berührt.

Figur 5 zeigt eine abgewandelte Ausführungsform der Indikatorelektroden-Anordnung gemäss Figur 4. Der Träger 5 ist hier breiter als die dielektrische Materialschicht 7a. Auf dem Trägerband 5 ist eine Leiterbahn 32 angeordnet. Diese bandförmige Indikatorelektroden-Anordnung könnte zusammen mit dem in Figur 3 gezeigten Gefäss bzw. in einer Vorrichtung gemäss Figur 2 verwendet werden. Die Aussenfläche 39 der dielektrischen Materialschicht 7a ist in dem an die Elektrodenfläche angrenzenden Bereich aufgerauht, so dass die Oberfläche hydrophil ist. Der sonstige Aufbau entspricht dem zu Figur 4 Gesagten.

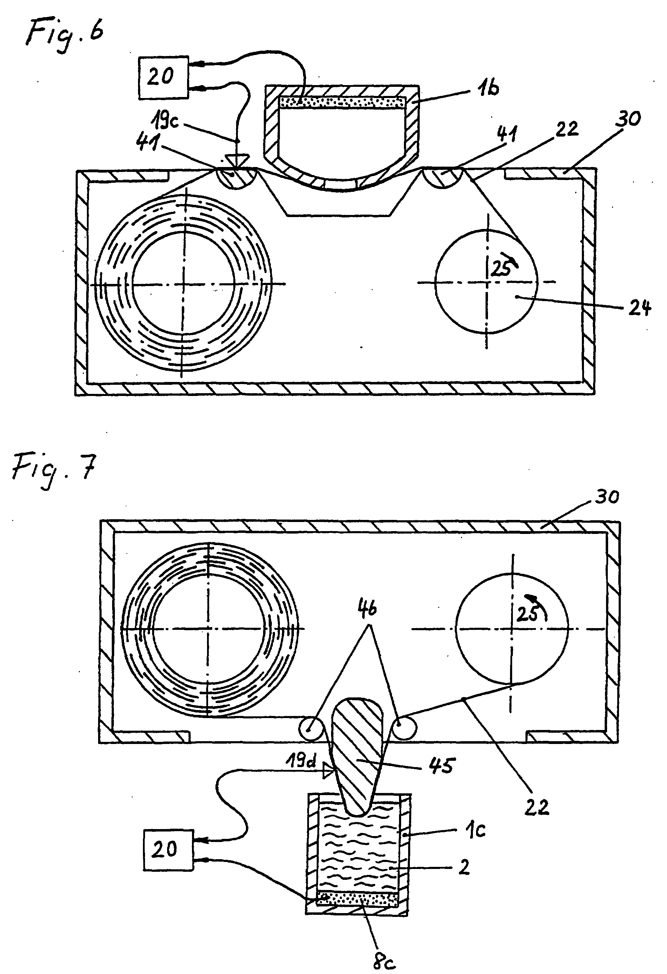

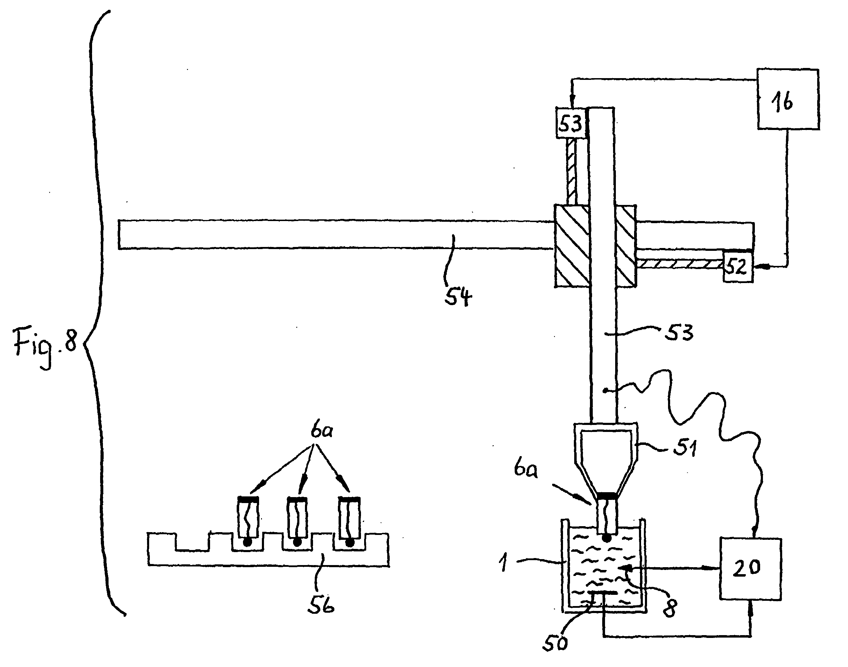

Die Figuren 6 und 7 zeigen alternative Ausführungsbeispiele für die Führung des Trägerbands 22. Dieses ist dabei analog dem zu Figur 2 Gesagten mit zwei Spulen verbunden und in einer Bandkassette 30 gelagert.

Die in Figur 6 gezeigte Variante entspricht weitgehend derjenigen gemäss Figur 2. Sie hat jedoch kein Anpresselement, welches das Trägerband 22 gegen die Gefässöffnung presst. Das Trägerband 22 ist durch zwei Führungselemente 41 so geführt, dass es an dem Gefäss 1b im Bereich der Gefässöffnung anliegt und durch Spannen des Trägerbands gegen die Gefässöffnung gezogen wird. Die Seitenwand 43 des Kassettengehäuses 30 weist eine Aussparung 44 auf, so dass zwischen den Führungselementen 41 ein freier Raum entsteht, welcher für das Gefäss 1b vorgesehen ist. Bei dieser Ausführungsform wird bevorzugt eine bandförmige Indikatorelektroden-Anordnung mit glatter Aussenfläche verwendet, wie sie in den Figuren 4 und 5 gezeigt ist. Der Elektrodenwechsel ist hier weiter vereinfacht, da keine Bewegung des Gefässes oder der Bandkassette senkrecht zu der Öffnungsebene notwendig ist, um diese mit dem Band in Eingriff zu bringen. Dies geschieht durch einfaches Spannen des Bandes, was beispielsweise durch eine Drehmomentsteuerung des auf die Zugspule 24 wirkenden Drehantriebs möglich ist. Der symbolische Taststift 19c ist über einem der Führungselemente 41 angeordnet. Das der selektierten Indikatorelektrode zugeordnete Kontaktelement befindet sich im Bereich des Taststifts 19c und wird von diesem abgetastet. Bei dem hier zu verwendenden Trägerband ist daher das Kontaktelement in Längsrichtung des Bandes von der ihm zugeordneten Indikatorelektrode abgesetzt. Der Taststift 19c ist, wie auch die im Gefäss 1b angeordnete Referenzelektrode 8b, elektrisch mit der Messeinrichtung 20 verbunden.

Die Variante gemäss Figur 7 verwendet ein von den bisher besprochenen Ausführungsbeispielen abweichendes Prinzip, um selektiv eine der Indikatorelektroden mit der zu untersuchenden Flüssigkeit in Kontakt zu bringen. Das Gefäss 1c ist an seinem oberen Ende offen und das Trägerband 22 ist durch Führungselemente 45, 46 so geführt, dass ein kurzer Bandausschnitt in die zu analysierende Flüssigkeit 2 eintaucht. Die nicht gezeichnete, selektierte Indikatorelektrode befindet sich an dem tiefsten Punkt 48 des Trägerbands. Das ihr zugeordnete Kontaktelement ist in Längsrichtung des Bandes versetzt zu der Indikatorelektrode angeordnet, es befindet sich unter dem elektrischen Taster 19d und wird von diesem abgetastet. Dieser Taster sowie die am Boden des Gefässes 1c angeordnete Referenzelektrode 8c ist mit der Messeinrichtung 20 verbunden. Die für das Absaugen der Flüssigkeit und für das Einfüllen einer neuen Flüssigkeit notwendigen Vorrichtungen sind nicht gezeichnet. Dasselbe gilt für Figur 6.

Figur 8 zeigt die schematische Darstellung einer alternativen Voltammetrie-Vorrichtung mit einem Indikatorelektroden-Wechsler. Die bei dieser Vorrichtung verwendeten Indikatorelektroden 6a können unabhängig voneinander bewegt werden. Der Elektrodenwechsler besteht aus einem Greifer 51, der an Linearführungen 53, 54 in horizontaler und vertikaler Richtung bewegbar gelagert ist. Ausserdem ist der Greifer 51 mit einem Horizontalantrieb 52 und einem Vertikalantrieb 53 gekoppelt. Diese Antriebe erlauben das Bewegen des Greifers 51 in einer Ebene, sie werden durch die Ablaufsteuerung 16 angesteuert. In einem mit dem Greifer erreichbaren Elektrodenmagazin 56 befindet sich ein Vorrat von Indikatorelektroden und eine dieser Elektroden kann mit dem Greifer 51 in den für die zu analysierende Flüssigkeit vorgesehenen Bereich des Gefässes eingebracht werden. Der Greifer 51 hält die Indikatorelektrode während dem Durchführen der Analyse und verbindet diese gleichzeitig mit der Messeinrichtung 20. Auch die Referenzelektrode 8 und die Hilfselektrode 50 sind elektrisch mit der Messeinrichtung verbunden.

## Patentansprüche

1. Vorrichtung für die Voltametrie, mit einem Gefäss (1) zur Aufnahme einer zu analysierenden Flüssigkeit (2), in dem unterhalb des vorgesehenen Flüssigkeitsspiegels eine mit einer Messeinrichtung (20) verbundene Referenzelektrode (8) angeordnet ist, mit mehreren Indikatorelektroden (6), von denen sich wenigstens eine selektierte Indikatorelektrode im für die Flüssigkeit vorgesehenen Bereich des Gefässes (1) befindet, mit Mitteln (19), um die selektierte Indikatorelektrode mit der elektrischen Messeinrichtung (20) zu verbinden, **dadurch gekennzeichnet, dass** die Vorrichtung einen mit einer Ablaufsteuerung (16) in Wirkverbindung stehenden Elektrodenwechsler aufweist und dass die selektierte Indikatorelektrode durch den Elektrodenwechsler durch eine der anderen Indikatorelektroden ersetzbar ist.

2. Vorrichtung nach Anspruch 1, **dadurch gekennzeichnet, dass** die Indikatorelektroden auf einem gemeinsamen Träger (5) angeordnet sind und der Träger relativ zu dem Gefäss (1) derart bewegbar gelagert ist, dass selektiv wenigstens eine der Indikatorelektroden in den für die Flüssigkeit vorgesehenen Bereich des Gefässes und mit der Flüssigkeit in Kontakt bringbar ist, und dass der Elektrodenwechsler einen mit dem Träger (5) in Wirkverbindung stehenden Bewegungsantrieb (10) aufweist.

3. Vorrichtung nach Anspruch 2, **dadurch gekennzeichnet, dass** das Gefäss (1) unterhalb des vorgesehenen Flüssigkeitsspiegels eine Öffnung (3) aufweist und der Träger (5) ausserhalb des Gefässes derart bewegbar angeordnet ist, dass zum Selektieren einer Indikatorelektrode (6) eine solche in den Bereich der Gefässöffnung bringbar ist, und dass Mittel vorgesehen sind, um den Träger bei selektierter Indikatorelektrode flüssigkeitsdicht mit der Gefässöffnung in Eingriff zu bringen.

4. Vorrichtung nach einem der Ansprüche 2 oder 3, **dadurch gekennzeichnet, dass** der Träger eine Trägerscheibe ist und die Indikatorelektroden auf einer Seitenfläche der Trägerscheibe angeordnet sind, dass die Trägerscheibe in ihrer Scheibenebene verlagerbar, insbesondere drehbar gelagert ist und dass der Bewegungsantrieb ein mit der Scheibe gekoppelter Linear- oder Drehantrieb ist.

5. Vorrichtung nach einem der Ansprüche 2 oder 3, **dadurch gekennzeichnet, dass** der Träger ein flexibles Trägerband (22) ist, auf dem die Indikatorelektroden angeordnet sind.

6. Vorrichtung nach Anspruch 5, **dadurch gekennzeichnet, dass** ein Vorrat des Trägerbands (22) auf einer Vorratsspule (23) aufgewickelt ist, dass das äussere Ende des Wickels derart mit einer Zugspule (24) verbunden ist, dass das Trägerband durch Drehen der Zugspule auf diese auf- und von der Vorratsspule abwickelbar ist, und dass das Trägerband zwischen den beiden Spulen teilweise im für die Flüssigkeit vorgesehenen Bereich des Gefässes liegt und durch Drehen der Zugspule die Indikatorelektroden sequentiell in diesen Bereich des Gefässes bringbar sind.

7. Vorrichtung nach Anspruch 6, **dadurch gekennzeichnet, dass** die Vorratsspule (23) und die Zugspule (24) als Teil einer Bandkassette in einem Kassettengehäuse (30) drehbar gelagert sind.

8. Vorrichtung nach einem der Ansprüche 1 bis 7, **dadurch gekennzeichnet, dass** das Elektrodenmaterial (34) der Indikatorelektrode mit einer dielektrischen Materialschicht (7) überzogen ist, die wenigstens eine Öffnung (35) aufweist, in deren Bereich das Elektrodenmaterial als wirksame Elektrodenfläche freiliegt.

9. Vorrichtung nach Anspruch 8 und einem der Ansprüche 2 bis 7, **dadurch gekennzeichnet, dass** das Elektrodenmaterial (34) aller auf dem Träger angeordneten Indikatorelektroden von einer gemeinsamen dielektrischen Materialschicht (7a) überzogen ist.

10. Vorrichtung nach einem der Ansprüche 8 oder 9, **dadurch gekennzeichnet, dass** die Indikatorelektrode als Mikroelektrode oder eine Mehrzahl von arrayförmig angeordneten Mikroelektroden (38) ausgebildet ist, deren wirksame Elektrodenfläche höchstens 0,05 mm² beträgt.

11. Vorrichtung nach einem der Ansprüche 8 bis 10, **dadurch gekennzeichnet, dass** die Oberfläche der dielektrischen Materialschicht (39) wenigstens in dem an die Elektrodenfläche angrenzenden Bereich aufgerauht ist, so dass die Oberfläche hydrophil ist.

12. Vorrichtung nach Anspruch 2 bis 11, **dadurch gekennzeichnet, dass** der Träger aus elektrisch leitendem Material besteht und für alle Indikatorelektroden als gemeinsames Kontaktelement dient.

13. Vorrichtung nach einem der Ansprüche 2 bis 11, **dadurch gekennzeichnet, dass** der Träger (5) wenigstens ein elektrisches Kontaktelement (49) aufweist und jede Indikatorelektrode (6) einem Kontaktelement zugeordnet und mit diesem durch eine zwischen der dielektrischen Materialschicht und dem Träger liegende Leiterbahn (32) elektrisch verbunden ist.

14. Vorrichtung nach einem der Ansprüche 1 bis 13, **dadurch gekennzeichnet, dass** in dem für die Flüssigkeit vorgesehenen Bereich des Gefässes neben der selektierten Indikatorelektrode (6) und der Referenzelektrode (8) zusätzlich eine ebenfalls mit der elektrischen Messeinrichtung verbundene Hilfselektrode (50) vorgesehen ist.

15. Indikatorelektroden-Anordnung mit mehreren Indikatorelektroden (6), die auf einem gemeinsamen Träger (5) angeordnet sind, für eine Vorrichtung nach einem der Ansprüche 2 bis 14, **gekennzeichnet dadurch, dass** der Träger derart adaptiert ist, dass der Träger (5) relativ zu dem Gefäss (1) bewegbar gelagert werden kann, damit unter Mitwirkung des Bewegungsantriebs eines Elektrodenweachsters, selektiv wenigstens eine der Indikatorelektroden (6) in den für die Flüssigkeit vorgesehenen Bereich des Gefässes (1) und mit der Flüssigkeit in Kontakt bringbar ist.

16. Bandkassette mit einem Kassettengehäuse und einem Trägerband (22) für eine Vorrichtung nach Anspruch 8, **gekennzeichnet dadurch, dass** im Kassettengehäuse eine Vorratsspule (23) und eine Zugspule (24) drehbar gelagert sind, wobei auf der Vorratsspule (23) ein Vorrat von Trägerband (22) mit mehreren Indikatorelektroden aufgewickelt ist und das Ende dieses Vorratswickels mit der Zugspule verbunden ist, so dass das Band durch Drehen der Zugspule auf diese auf- und von der Vorratsspule abwickelbar ist.

17. Verfahren zur Durchführung einer voltametrischen Analyse mittels einer Vorrichtung nach Anspruch 1, **dadurch gekennzeichnet, dass** aus einer Mehrzahl von Indikatorelektroden (6,6a) wenigstens eine selektiert und in den für die Flüssigkeit vorgesehenen Bereich des Gefässes gebracht wird, und dass diese selektierte Indikatorelektrode nach vorbestimmbaren Abläufen automatisch durch eine der anderen Indikatorelektroden ersetzt wird, und dass die jeweils selektierte Indikatorelektrode mit der elektrischen Messeinrichtung (20) verbunden wird.

## Claims

1. Appliance for voltametry, with a vessel (1) for accommodating a liquid (2) which is to be analysed, in which a reference electrode (8) connected to a measuring appliance (20) is arranged below the envisaged liquid level, with several indicator electrodes (6), of which at least one selected indicator electrode is located in that area of the vessel (1) intended for the liquid, with means (19) for connecting the selected indicator electrode to the electrical measuring appliance (20),
**characterised in that**
the appliance has an electrode changer which is in effective connection with a sequence controller (16), and that the selected indicator electrode can be replaced by one of the other indicator electrodes, by means of the electrode changer.

2. Appliance in accordance with claim 1, **characterised in that** the indicator electrodes are arranged on a common carrier (5) and the carrier is borne so as to be movable relative to the vessel (1) in such a way that selectively, at least one of the indicator electrodes can be brought into that area of the vessel intended for the liquid and into contact with the liquid, and that the electrode changer has a motional drive (10) which is in effective connection with the carrier (5).

3. Appliance in accordance with claim 2, **characterised in that** the vessel (1) has an opening (3) below the envisaged liquid level and the carrier (5) outside the vessel is arranged so as to be movable in such a way that for the selection of an indicator electrode (6), one such can be brought into the area of the vessel opening, and that means are provided for causing the carrier to engage with the vessel opening in a liquid-tight manner once the indicator electrode has been selected.

4. Appliance in accordance with one of the claims 2 or 3, **characterised in that** the carrier is a carrier plate and the indicator electrodes are arranged on one side surface of the carrier plate; that the carrier plate is borne in a such a way that it can be displaced in its plate plane, in particular that it is borne in a rotatable manner; and that the motional drive is a linear or rotary drive coupled with the plate.

5. Appliance in accordance with one of the claims 2 or 3, **characterised in that** the carrier is a flexible carrier band (22) on which the indicator electrodes are arranged.

6. Appliance in accordance with claim 5, **characterised in that** a supply of the carrier band (22) is wound up on a supply reel (23); that the outer end of the roll is connected to a drawing reel (24) in such a way that by turning the drawing reel, the carrier band can be wound onto it and off the supply reel; and that between the two reels, the carrier band lies partially in the area of the vessel intended for the liquid, and the indicator electrodes can be brought sequentially into this area of the vessel by turning the drawing reel.

7. Appliance in accordance with claim 6, **characterised in that** the supply reel (23) and the drawing reel (24), as part of a band cassette, are held in a rotatable manner in a cassette housing (30).

8. Appliance in accordance with one of the claims 1 to 7, **characterised in that** the electrode material (34) of the indicator electrode is coated with a layer of dielectric material (7) which has at least one opening (35), in the area of which the electrode material is exposed as an effective electrode surface.

9. Appliance in accordance with claim 8 and one of the claims 2 to 7, **characterised in that** the electrode material (34) of all indicator electrodes arranged on the carrier is coated with a common dielectric material layer (7a).

10. Appliance in accordance with one of the claims 8 or 9, **characterised in that** the indicator electrode is designed as a microelectrode or a number of microelectrodes (38) arranged in the form of an array, whose effective electrode surface is at most 0.05 mm².

11. Appliance in accordance with one of the claims 8 to 10, **characterised in that** the surface of the dielectric material layer (39) is roughened at least in the area bordering on the electrode surface, so that the surface is hydrophilic.

12. Appliance in accordance with claim 2 to 11, **characterised in that** the carrier comprises electrically conductive material and serves as a common contact element for all the indicator electrodes.

13. Appliance in accordance with one of the claims 2 to 11, **characterised in that** the carrier (5) has at least one electrical contact element (49) and each indicator electrode (6) is assigned to a contact element and is electrically connected to it by means of a strip conductor (32) lying between the dielectric material layer and the carrier.

14. Appliance in accordance with one of the claims 1 to 13, **characterised in that in that** area of the vessel intended for the liquid, besides the selected indicator electrode (6) and the reference electrode (8) there is in addition an auxiliary electrode (50) which is likewise connected to the electrical measuring appliance.

15. Indicator electrode arrangement with several indicator electrodes (6) which are arranged on a common carrier (5), for an appliance in accordance with one of the claims 2 to 14, **characterised in that** the carrier (5) can be held so as to be movable relative to the vessel (1), so that in co-operation with the motional drive of an electrode changer, selectively at least one of the indicator electrodes (6) can be brought into that area of the vessel (1) intended for the liquid, and into contact with the liquid.

16. Band cassette with a cassette housing and a carrier band (22) for an appliance in accordance with claim 8, **characterised in that** a supply reel (23) and a drawing reel (24) are held in the cassette housing in a rotatable manner, wherein a supply of carrier band (22) with several indicator electrodes is wound up on the supply reel (23) and the end of this supply roll is connected to the drawing reel so that the band can be wound onto the drawing reel and off the supply reel by turning the drawing reel.

17. Method for carrying out a voltametric analysis by means of an appliance in accordance with claim 1, **characterised in that** out of a number of indicator electrodes (6, 6a), at least one is selected and brought into that area of the vessel intended for the liquid, and that this selected indicator electrode is automatically replaced, following sequences which can be predetermined, by one of the other indicator electrodes, and that the respectively selected indicator electrode is connected to the electrical measuring appliance (20).

## Revendications

1. Dispositif pour la voltamétrie, comportant un récipient (1) qui est destiné à recevoir un liquide à analyser (2) et dans lequel une électrode de référence (8) reliée à un dispositif de mesure (20) est disposée au-dessous du niveau de liquide prévu, comportant plusieurs électrodes indicatrices (6) dont au moins une électrode indicatrice sélectionnée se trouve dans la zone du récipient (1) prévue pour le liquide, et comportant des moyens (19) pour relier l'électrode indicatrice sélectionnée au dispositif de mesure électrique (20), **caractérisé en ce qu'**il comporte un échangeur d'électrode qui est en relation fonctionnelle avec une commande séquentielle (16), et **en ce que** l'électrode indicatrice sélectionnée peut être remplacée grâce audit échangeur par l'une des autres électrodes indicatrices.

2. Dispositif selon la revendication 1, **caractérisé en ce que** les électrodes indicatrices sont disposées sur un support commun (5), et ce support est mobile par rapport au récipient (1) de telle sorte que l'une au moins des électrodes indicatrices, sélectivement, puisse être amenée dans la zone du récipient prévue pour le liquide et puisse être mise en contact avec le liquide, et **en ce que** l'échangeur d'électrode comporte un mécanisme de mouvement (10) qui est en relation fonctionnelle avec le support (5).

3. Dispositif selon la revendication 2, **caractérisé en ce que** le récipient (1) comporte une ouverture (3) au-dessous du niveau de liquide prévu, et le support (5) est disposé à l'extérieur du récipient pour être mobile de telle sorte que pour la sélection d'une électrode indicatrice (6), une électrode indicatrice puisse être amenée dans la zone de l'ouverture du récipient, et **en ce qu'**il est prévu des moyens pour mettre le support en contact, de manière étanche au liquide, avec l'ouverture du récipient en présence d'une électrode indicatrice sélectionnée.

4. Dispositif selon la revendication 2 ou 3, **caractérisé en ce que** le support est constitué par une plaque de support et les électrodes indicatrices sont disposées sur une surface latérale de ladite plaque de support, **en ce que** la plaque de support est mobile, en particulier en rotation, dans son plan de plaque, et **en ce que** le mécanisme de mouvement est constitué par un entraînement linéaire ou rotatif accouplé à la plaque.

5. Dispositif selon la revendication 2 ou 3, **caractérisé en ce que** le support est constitué par une bande de support flexible (22) sur laquelle sont disposées les électrodes indicatrices.

6. Dispositif selon la revendication 5, **caractérisé en ce qu'**une réserve de bande de support (22) est enroulée sur une bobine de réserve (23), **en ce que** l'extrémité extérieure de la bobine est reliée à une bobine de traction (24) de telle sorte que la bande de support, grâce à la rotation de la bobine de traction, puisse être enroulée sur celle-ci et déroulée de la bobine de réserve, et **en ce que** la bande de support, entre les deux bobines, se trouve en partie dans la zone du récipient prévue pour le liquide, et grâce à la rotation de la bobine de traction, les électrodes indicatrices peuvent être amenées de manière séquentielle dans cette zone du récipient.

7. Dispositif selon la revendication 6, **caractérisé en ce que** la bobine de réserve (23) et la bobine de traction (24) sont montées en rotation, comme éléments d'une cassette à bande, dans un boîtier de cassette (30).

8. Dispositif selon l'une des revendications 1 à 7, **caractérisé en ce que** le matériau d'électrode (34) de l'électrode indicatrice est recouvert d'une couche de matériau diélectrique (7) qui présente une moins une ouverture (35) dans la zone de laquelle le matériau d'électrode est dégagé comme surface d'électrode active.

9. Dispositif selon la revendication 8 et l'une des revendications 2 à 7, **caractérisé en ce que** le matériau (34) de toutes les électrodes indicatrices disposées sur le support est recouvert d'une couche de matériau diélectrique commune (7a).

10. Dispositif selon la revendication 8 ou 9, **caractérisé en ce que** l'électrode indicatrice est conçue comme une micro-électrode ou comme une multiplicité de micro-électrodes (38) qui sont disposées en rangée et dont la surface d'électrode active est au maximum de 0,05 mm².

11. Dispositif selon l'une des revendications 8 à 10, **caractérisé en ce que** la surface de la couche de matériau diélectrique (39) est rendue rugueuse au moins dans la zone voisine de la surface d'électrode, de sorte que la surface est hydrophile.

12. Dispositif selon les revendications 2 à 11, **caractérisé en ce que** le support se compose d'un matériau conducteur d'électricité et sert d'élément de contact commun pour toutes les électrodes indicatrices.

13. Dispositif selon l'une des revendications 2 à 11, **caractérisé en ce que** le support (5) comporte au moins un élément de contact électrique (49) et chaque électrode indicatrice (6) est associée à un élément de contact et est reliée électriquement à celui-ci par une piste conductive (32) située entre la couche de matériau diélectrique et le support.

14. Dispositif selon l'une des revendications 1 à 13, **caractérisé en ce que** dans la zone du récipient prévue pour le liquide, il est prévu en supplément, près de l'électrode indicatrice (6) sélectionnée et de l'électrode de référence (8), une électrode auxiliaire (50) également reliée au dispositif de mesure électrique.

15. Groupement d'électrodes indicatrices comprenant plusieurs électrodes indicatrices (6) qui sont disposées sur un support commun (5), pour un dispositif selon l'une des revendications 2 à 14, **caractérisé en ce que** le support (5) est adapté de manière à pouvoir être monté mobile par rapport au récipient (1), pour que l'une au moins des électrodes indicatrices (6), sélectivement, puisse être amenée dans la zone du récipient (1) prévue pour le liquide et puisse être mise en contact avec le liquide avec le concours du mécanisme de mouvement d'un échangeur d'électrode.

16. Cassette à bande comportant un boîtier de cassette et une bande de support (22) pour un dispositif selon la revendication 8, **caractérisé en ce qu'**une bobine de réserve (23) et une bobine de traction (24) sont montées en rotation dans le boîtier de cassette, une réserve de bande de support (22) portant plusieurs électrodes indicatrices étant enroulée sur la bobine de réserve (23) et l'extrémité de cette bobine de réserve étant reliée à la bobine de traction, de sorte que la bande, grâce à une rotation de la bobine de traction, peut être enroulée sur celle-ci et déroulée de la bobine de réserve.

17. Procédé pour effectuer une analyse voltamétrique à l'aide d'un dispositif selon la revendication 1, **caractérisé en ce que** parmi une multiplicité d'électrodes indicatrices (6, 6a), au moins une est sélectionnée et est amenée dans la zone du récipient prévue pour le liquide, et **en ce que** cette électrode indicatrice sélectionnée est remplacée automatiquement par l'une des autres électrodes indicatrices suivant des déroulements aptes à être prédéfinis, et **en ce que** l'électrode indicatrice sélectionnée est reliée au dispositif de mesure électrique (20).
